# EUROPÄISCHE PATENTSCHRIFT

(11) **EP 0 752 744 B1**
(45) Veröffentlichungstag und Bekanntmachung des Hinweises auf die Patenterteilung: **12.01.2000**
(21) Anmeldenummer: 96109674.0
(22) Anmeldetag: 17.06.1996
(51) Int. Cl.: H02B 1/048

(54) **Elektrotechnisches Bauteil**
Electrical component
Composant électrique

(30) Priorität: 28.06.1995 CH 189095
(43) Veröffentlichungstag der Anmeldung: 08.01.1997
(73) Patentinhaber: Schurter AG, CH-6005 Luzern (CH)
(72) Erfinder: Zumstein, Edy, 6074 Giswil (CH); Amrein, Heinz, 6010 Kriens (CH)
(74) Vertreter: Kemény AG Patentanwaltbüro

(56) Entgegenhaltungen:
- EP-A- 0 568 859
- DE-A- 1 790 282
- DE-A- 4 118 482
- DE-U- 7 414 367
- DE-U- 9 209 804
- DE-U- 9 406 314
- US-A- 3 278 145
- US-A- 3 899 101

## Beschreibung

Die vorliegende Erfindung betrifft ein elektrotechnisches Bauteil welches für Steckmontage in eine entsprechend dimensionierte Oeffnung einer Gerätestirnwand geeignet ist, insbesondere Modul mit z.B. Steckern, Schaltern und dgl., mit einem vorzugsweise aus Kunststoff bestehenden Gehäuse welches an seinem in Steckrichtung vorderen Ende auf der Aussenseite einen Haltemechanismus für die Steckmontage aufweist.

Bis vor kurzer Zeit wurden elektrotechnische Bauteile in entsprechend dimensionierte Oeffnungen von Gerätewänden montiert, indem ein Bauteil jeweils von der Geräteaussenseite in die Oeffnung gestossen wurde. Das Bauteil musste dann in der Regel mittels Niet- oder Schraubverbindungen, ggf. mittels Schnappverbindungen am in Steckrichtung hinteren Ende, an der Gerätewand befestigt werden. Eine vorherige Verdrahtung der elektrischen Anschlüsse zur Geräteinnenseite war zwar möglich (direkt vor der Oeffnung), bedingte jedoch unnötig verlängerte Leiterdrähte und somit zusätzlichen Platz im Gerät. Ein weiterer Nachteil bestand darin, dass die Oeffnungen in der Gerätewand dem grössten Querschnitt des Bauteils auf der Geräteinnenseite entsprechen mussten.

Dies führte zur grundsätzlichen Idee, die Bauteile durch Steckmontage von hinten her in die Oeffnungen der Gerätewand einzuführen. Dies erlaubt, dass die Bauteile rückseitig grösser als die in die Oeffnungen einzusteckenden Vorderteile sein können, bzw. das Anbringen von grösseren rückseitigen Komponenten. Eine Verdrahtung der Anschlüsse kann hinter der Gerätewand selbstverständlich im voraus erfolgen. Durch die Steckmontage wird die Montage-Zeit minimal.

Dieser Idee der Steckmontage von der Geräteinnenseite her in die Gerätewände mangelte es bisher an einem einfachen, zuverlässigen Einrastmechanismus, welcher eine einwandfreie Halterung garantiert, und von aussen nicht als solcher erkannt wird, um den Endbenutzer nicht zum Auslösen desselben zu verleiten.

Betreffend der Steckmontage ist aus der DE-U-92 09 804 eine Abdeckung für das Verschliessen von Öffnungen in Gerätestirnwänden bekannt, welche von Aussen in die Öffnung eingesetzt werden kann und dieses abschliesst. Diese weist einen Einrastmechanismus auf, welcher zu Anlage an die Öffnungskante ausgelegt ist. Hierfür sind jeweils zwei einander gegenüberliegende Nutelemente vorgesehen, deren Bodenbereiche fest mit dem Abdeckgehäuse verbunden sind und voneinander einen geringeren Abstand aufweisen als die entsprechende Öffnungsweite der Öffnung. Um zu verhindern, dass sich die Abdeckung in eingebauten Zustand verschiebt ist ein zusätzliches Verriegelungselement in Bügelform vorgesehen, welches manuell von hinten in die Verriegelungsposition gebracht werden muss. Damit eignet sich der Einrastmechanismus nur für Abdeckungen, welche von Aussen in die Öffnungen eingesetzt werden und es können nur Ausschnitte von Öffnungen abgedeckt werden, da immer noch des Verriegelungselement durch die Öffnung hindurch bedient werden muss.

Eine Ähnliche Abdeckung ist in US-A-3 389 101 dargestellt, mit dem Unterschied, dass die Verriegelung selbstständig über ein Federelement erfolgt. Allerdings hat diese Verriegelung den Nachteil, dass sie lediglich über die verhältnismässig geringe Federkraft des Federelements funktioniert und damit auch einfach wieder gelöst werden kann und aufgrund der Konstruktion ebenfalls nur von Aussen eingesetzt werden kann.

Weiter ist beispielsweise aus der US-A-3 278 145 ein als Relais aufgebautes Bauteil bekannt, welches für die Steckmontage in eine entsprechend dimensionierte Öffnung in der Gerätestirnwand geeignet ist. Dabei besteht das Gehäuse vorzugsweise aus Kunststoff, welches an seinem vorderen

Ende auf der Aussenseite einen federnden Einrastmechanismus aufweist, welcher zur Anlage an die Öffnungskante ausgebildet ist. Der Einrastmechanismus umfasst dabei parallel zur vorderen Gehäusekante verlaufende, aussenseitig parallel zueinander auf sich gegenüberliegenden Seiten der Gehäusekante angeordnete Nuten. Dabei weist eine der Nuten eine als Anschlag dienende, nach hinten geneigte Rückwand auf, während die andere Nut durch zwei seitlich am Bauteilrand angeordnete Federn gebildet ist, welche unter dem Einfluss äusserer Kräfte mindestens um die Tiefe der anderen Nut einfedern können. Der Nachteil dieser Lösung liegt darin, dass die Halterung von Aussen sehr einfach lösbar ist und sich andererseits aufgrund der Anordnung der Federelemente nur für Bauteile mit geringer mechanischer Belastung resp. geringen äusseren Krafteinwirkungen eignen, da sonst die Halterung durch diese Einflüsse selbstständig gelöst werden können.

Die Aufgabe der vorliegenden Erfindung bestand nun darin, ein elektrotechnisches Bauteil der genannten Art zu finden, welches die bekannten Mängel bei der Steckmontage von der Rückseite der Gehäusewand her beseitigt und insbesondere eine stabile Befestigung erlaubt.

Diese Aufgabe wird bei einem elektrotechnischen Bauteil der eingangs definierten Art erfindungsgemäss durch die Merkmale des kennzeichnenden Teils von Anspruch 1 gelöst.

Dank der besonderen Ausbildung des Einrastmechanismus, mit auf einer Gehäuseaussenseite als Zentriernut mit federndem Boden ausgebildeten einen Nut und auf der gegenüberliegenden Gehäuseaussenseite liegender anderer Nut, welche das eigentliche Einrastelement bilden, wird das Bauteil bei der Montage vorerst in der Oeffnung der Gerätewand vorzentriert gehalten, dann das Bauteil durch eine Querbewegung in Richtung des federnden Nutbodens gedrückt und in der eingedrückten Stellung oder während dem Eindrücken verschwenkt, bis die andere Nut gegenüber der zugehörigen Oeffnungskante liegt (Schwenkbewegung ggf. bis zum Anschlag an der anderen Nut gegen die Gerätewand). Durch Lösen der Querkraft wird das Bauteil schliesslich durch die Federkraft in die Endstellung gebracht (beide Nuten im Eingriff mit der Oeffnungswand).

Vorteilhafterweise rasten nun die an den beiden seitlich angeordneten Zungen angeformten Verriegelungsnocken in die Wandöffnungen direkt über der Öffnungskante ein und verriegeln damit das eingesetzte Bauteil sicher und zuverlässig in der montierten Stellung.

Besondere Ausführungsformen der Erfindung sind in den abhängigen Ansprüchen 2-4 definiert. Eine besondere Ausführungsform des Bauteils, nämlich jene mit einem Schutzgehäuse, ist im abhängigen Anspruch 5 definiert.

Die Erfindung wird nachstehend anhand von in der Zeichnung dargestellten Ausführungsbeispielen noch etwas näher erläutert. Es zeigt:
Fig. 1 einen Schnitt, rein schematisch, durch einen Abschnitt eines Bauteilgehäuses in vorzentrierter Stellung;
Fig. 2 das Bauteilgehäuse nach Fig. 1 in der Stellung mit eingedrücktem Nutboden;
Fig. 3 das Bauteilgehäuse nach Fig. 1 in eingerasteter Stellung (zurückgefedertem Nutboden);
Fig. 4 ein mit einem Schutzgehäuse versehenes, in eine Oeffnung einer Gehäusewand eingesetztes Bauteil, und
Fig. 5A - 5D zeigt rein schematisch ein mit erfindungsgemässen Verriegelungsnocken ausgerüstetes Bauteil (funktionsweise beim Montieren).

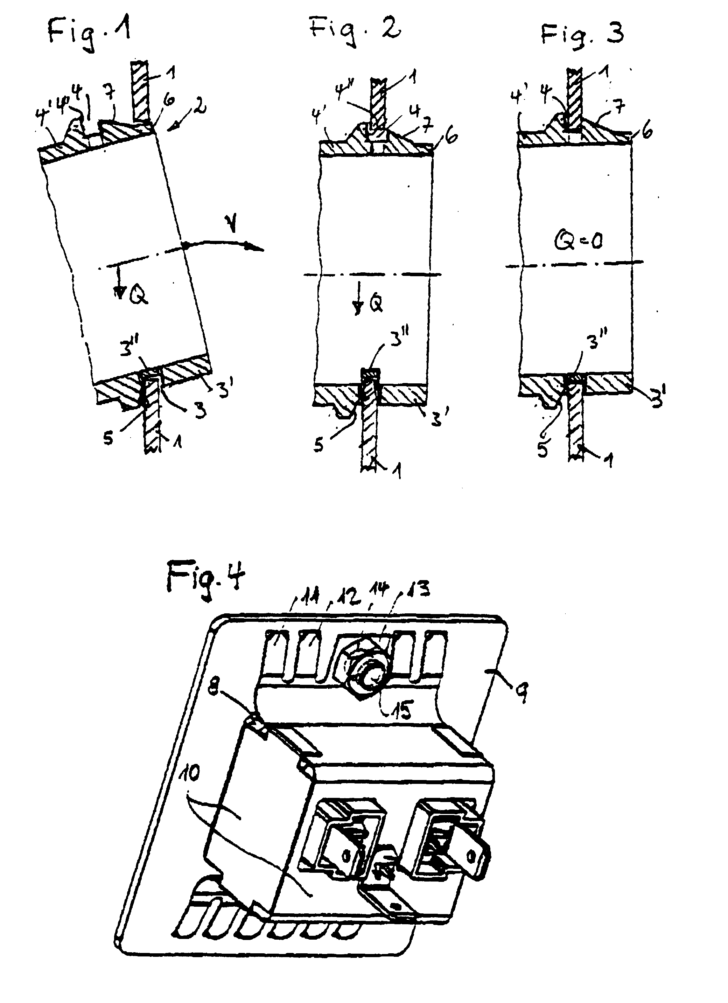

Fig. 1 bis 3 der Zeichnung zeigen eine Gerätegehäusewand 1 mit einer Oeffnung 2, in welche das vordere Ende eines elektrotechnischen Bauteils, z.B. ein Modul mit Stecker, Steckdose, Schalter oder eine Kombination dieser Elemente durch bekannte Einrast-Montage einzusetzen ist, vorzugsweise von der Geräteinnenseite her.

Der hierzu erforderliche Mechanismus umfasst zwei Nuten 3 bzw. 4 auf der Aussenseite von zwei sich gegenüberliegenden Bauteilgehäusewänden 3', 4'. Die Anschläge für die Oeffnungsränder bildenden Böden der Nuten 3, 4 weisen einen gegenseitigen Abstand auf, welcher etwa der Weite der Oeffnung 2 entspricht (geringfügig kleiner). Die eine Nut 3, welche die Rolle einer Zentriernute spielt, weist eine als Anschlag dienende, nach hinten geneigte Rückwand 5 auf (diese kann bezüglich der Bauteilgehäuseaussenwand 3' überhöht sein oder nicht). Abgesehen von der geneigten Rückwand weisen die Nuten 3, 4 im wesentlichen einen rechteckigen Querschnitt auf, wobei die Breite der Nuten geringfügig grösser ist als die Dicke der Gerätegehäusewand 1 (geringes Spiel).

Der Bodenabschnitt 3'' der Nut 3 ist bezüglich der starren Bauteilgehäusewand 3' federnd nachgiebig ausgebildet, so dass er unter Einfluss äusserer Kräfte (Querkraft Q auf Bauteil gegen die Gerätegehäusewand) nach innen einfedern kann (s. Fig. 2). Dadurch kann das Bauteil in eingedrückter Stellung durch Verschwenken (Pfeil V) in die Position nach Fig. 2 gebracht werden, wobei das Bauteil mit einer als Anschlag dienenden Ueberhöhung der Rückwand 4'' der Nut 4 gegen die Wand 1 zur Anlage gelangt. Die Nut 4 liegt nun direkt gegenüber der zugehörigen Kante der Oeffnung 2 (Fig. 2). Durch Lösen der Querkraft Q wird das Bauteil unter dem Einfluss der Federkraft des Bodenabschnittes 3'' selbsttätig in die in Fig. 3 gezeigte Endstellung gebracht (beide Nuten 3, 4 sind im Eingriff mit der die Oeffnung 2 umgebenden Wand 1).

Statt den Nutboden 3'' gegenüber der Bauteilgehäusewand 3 federnd auszubilden, könnte selbstverständlich der die Nut 3 enthaltende Abschnitt der starren Wand 3' bezüglich letzterer federnd ausgebildet sein.

Es ist auch denkbar, die Nut 3 in der Wand 3' starr auszubilden, jedoch auf dem starren Nutboden eine federelastische Auflage (z.B. gummielastische Einlage oder ein Blattfederelement) anzubringen, welche dann den wirksamen federnden Nutboden bildet.

Im Gehäusewandabschnitt zwischen der Nute 4 und der zugehörigen Gehäusekante 6 können mindestens stellenweise Auflaufschrägen 7 vorgesehen sein (vorzugsweise verläuft die Auflaufschräge 7 über die ganze Länge der Nute 4). Diese fakultative Auflaufschräge 7 kann beim Verschwenken des Bauteils zur Erzeugung der Querkraft Q benutzt werden.

Die Konstruktion erfordert minimale Montage-Zeit und somit kleine Montage-Kosten. Das Bauteil kann rückwärtig grösser sein als am Befestigungsende bzw. es können rückseitig beliebige Komponenten montiert werden. Alle Anschlüsse können vorgängig der Montage verdrahtet werden und eine einwandfreie Halterung ist gewährleistet. Durch Einfedern des Nutbodenabschnittes 3" lässt sich das Bauteil demontieren, ohne Beschädigungsgefahr für den Halte-bzw. Einrastmechanismus (leichter Druck entsprechend Querkraft Q, gefolgt von Schwenkbewegung).

Bei Montage von der Geräteinnenseite her weist das Bauteil sowohl von hinten als auch von der Frontseite her eine grosse Belastbarkeit auf. Ein eventueller Schrägzug auf Verbindungskabel wird durch das Einrastelement aufgefangen,

Bei Belastung von der Frontseite her entsteht im Einrastelement ein Drehmoment nach aussen und das Element verkeilt sich in der Montageöffnung.

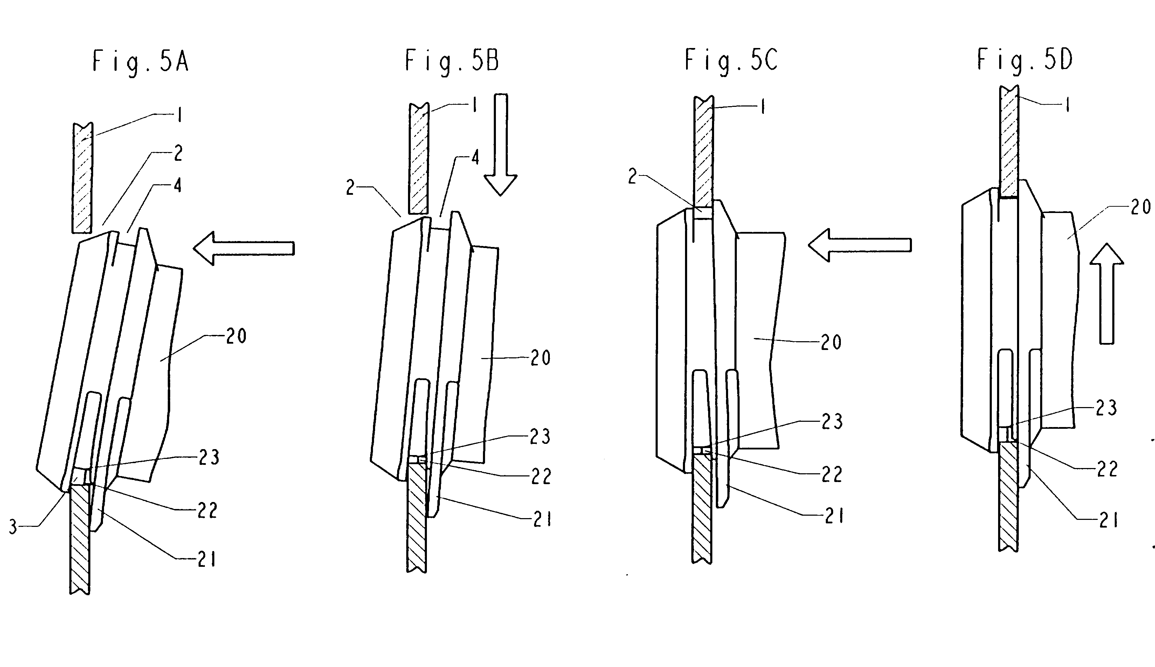

Fig. 4 illustriert ein elektrotechnisches Bauteil 8, welches in einer Montageöffnung einer Gerätewand 9 von hinten eingesteckt ist und das von einem Schutzgehäuse 10 aus elektronisch leitendem Material umgeben ist. Entlang von zwei Fusskanten des Schutzgehäuses sind nach aussen abstehende, vorzugsweise federnde Kontaktfinger 11, 12, 13 etc. vorgesehen. Dabei weist wenigstens der Kontaktfinger 13 eine Oeffnung 14 (hier Bohrung) auf, durch welche eine Befestigungsschraube 15 führbar ist um den Kontakt mit einer Erdleitungsplatte, hier die Gehäusewand 9, sicherzustellen. Die ggf. zu erdenden Komponenten des Bauteils 8 sind in Verbindung mit dem Schutzgehäuse 10.

Fig. 5 zeigt rein schematisch die Montage eines erfindungsgemässen Bauteils mit Verriegelung in die Oeffnung 2 einer Gehäusewand 1.

Das Bauteil 20 weist Nuten 3 und 4 (wie bei Fig. 1-3) auf, zusätzlich jedoch noch zwei seitliche Federzungen 21 (nur eine gezeigt). Auf jeder Zunge 21 ist ein Anschlagnocken 22 angeformt, welcher nach eingeschnapptem Bauteil 20 dessen Verriegelung in der montierte-n Stellung gewährleistet. Im Gegensatz zum Boden 23 der Nute 3 können die Federzungen 21 nur seitlich ausfedern, um die Montage zu ermöglichen. Die Nocken 22 verhindern ein Lösen des montierten Bauteils (s. Fig. 5D). Ein ggf. gewünschtes Lösen bedarf eines Hilfswerkzeuges (nicht dargestellt), welches zuerst die Zungen 21 und damit die Nocken 22 aus der Oeffnung 2 heben muss, bevor das Bauelement 20 durch Druck auf den federnden Wandabschnitt des Nutbodens 23 gelöst werden kann.

Der Abstand zwischen dem Boden der Nut 4 und der Wirkfläche der Verriegelungsnocken 22 ist nur geringfügig kleiner als die Weite der Gehäusewandöffnung 2.

Bei einer Belastung aus jeder möglichen Richtung von der Frontseite her verhindern die Verriegelungsnocken 22 ein Verschieben des Bauelementes in der Oeffnung, so dass der elastische Abschnitt des Bodens der Nut 3 nicht belastet wird und demzufolge auch nicht einfedern kann.

## Patentansprüche

1. Elektrotechnisches Bauteil welches für Steckmontage von der Geräteinnenseite her in eine entsprechend dimensionierte Oeffnung (2) einer Gerätestirnwand (1) geeignet ist, welches als Modul mit Steckern, Schaltern und dgl. aufgebaut ist, mit einem vorzugsweise aus Kunststoff bestehenden Gehäuse welches an seinem in Steckrichtung vorderen Ende auf der Aussenseite einen federnden Einrastmechanismus (3,4) für die Steckmontage aufweist, welcher zur Anlage an die Oeffnungskante (2) ausgebildet ist, wobei der Einrastmechanismus (3,4) zwei auf sich gegenüberliegenden Gehäusewänden (3',4') aussenseitig angeordnete, jeweils parallel zur vorderen Gehäusekante verlaufende Nuten (3,4) umfasst, deren zur Anlage an die Oeffnungskante (2) bestimmte Böden (3") einen der Weite der Oeffnung der Gerätestirnwand (1) entsprechenden Abstand aufweisen und von denen die eine als Einrastnut (3) ausgebildet ist mit einerseits einer als Anschlag dienenden, nach hinten geneigten oder ausfederbaren Rückwand (5) und andererseits zumindest deren Boden (3") als Feder ausgebildet ist, welcher unter dem Einfluss äusserer Kräfte um mindestens die Tiefe der anderen Nut einfedern kann, dadurch gekennzeichnet, dass das Gehäuse (20) an sich starr ist und der Boden (3") der Nut (3) Teil des Gehäuses (20) bildet, gegenüber dem Gehäuse (20) jedoch federnd ausgebildet ist, und im Bereich der Rückwand (5) zwei seitlich angeordnete federnde Zungen (21) mit darauf angeformten Anschlägen vorgesehen sind und Verriegelungsnocken (22) bilden, welche nach dem Einschnappen des Bauteils (20) in die Wandöffnung direkt über die entsprechende Oeffnungskante (2) zu liegen kommen und das eingesetzte Bauteil (20) in der montierten Stellung verriegeln.

2. Bauteil nach Anspruch 1, dadurch gekennzeichnet, dass der Boden (3") der Einrastnut (3) als Ganzes an sich starr ist, jedoch mit einer den zur Anlage an die Oeffnungskante (2) bestimmten Anschlag bildenden federelastischen Auflage ausgerüstet ist, z.B. mit einer gummielastischen Einlage oder einem Blattfederelement, welche Auflage den wirksamen Nutenboden (3") bildet und um mindestens die Tiefe der anderen Nut (4) einfedern kann.

3. Bauteil nach Anspruch 1 oder 2, dadurch gekennzeichnet, dass die rückseitige Wand (4") der anderen Nut (4) überhöht ist und einen zur Anlage an die Innenseite der Gerätestirnwand (1) bestimmten Anschlag bildet.

4. Bauteil nach einem der Ansprüche 1 bis 3, dadurch gekennzeichnet, dass mindestens Teile des zwischen der anderen Nut (4) und der zughörigen vorderen Geäusekante liegende Abschnittes der Gehäusewand (1) aussenseitig als Auflaufschräge ausgebildet ist.

5. Bauteil (8) nach einem der Ansprüche 1 bis 4, mit einem Schutzgehäuse (10) aus elektrisch leitendem Material, welches entlang wenigstens einer Fusskante eine Mehrzahl von Kontaktfingern (11,12,13) aufweist, welche dazu vorgesehen sind mit einer Erdleitungsplatte (9) in Kontakt zu treten, dadurch gekennzeichnet, dass mindestens einer der Kontaktfinger (11,12,13) eine Oeffnung (14) zum Durchführen einer Befestigungsschraube (15) aufweist.

## Claims

1. An electrical component, which is suitable for mounting in an appropriately dimensioned opening (2) in an end wall (1) of an apparatus by being plugged thereinto from the interior of the apparatus and which is constructed in the form of a module having connectors, switches and the like, includes a housing consisting preferably of synthetic material which, at the front end thereof in the direction of insertion, comprises an external, resilient latching mechanism (3, 4) that is designed to rest on the edge (2) of the opening when inserted therein, wherein the latching mechanism (3, 4) comprises two external grooves (3, 4) which extend in parallel with the front edge of the housing on opposite walls (3', 4') thereof and the bases (3") of which that are intended to rest on the edge (2) of the opening are spaced by an amount corresponding to the width of the opening in the end wall (1) of the apparatus whereby one groove is in the form of a latching groove (3) having, on the one hand, a rear wall (5) serving as a stop and which is backwardly inclined or may be resiliently bent back and, on the other hand, wherein at least the base (3") of the groove is in the form of a spring which can deflect resiliently by at least the depth of the other groove under the influence of an external force, characterised in that the housing (20) itself is rigid and the base (3") of the groove (3) forms part of the housing (20) although said base is resilient vis a vis the housing (20), and that two laterally arranged resilient tongues (21) are provided in the vicinity of the rear wall (5), said tongues (21) having stops thereon which form locking cams (22) that come to rest directly over the corresponding edges (2) of the opening after the component (20) has been snapped into the opening in the wall so as to lock the inserted component (20) in its mounted position.

2. A component in accordance with Claim 1, characterised in that the base (3") of the latching groove (3) itself is basically rigid but is provided with a resilient bed e.g. a resilient rubber insert, or a leaf spring element which forms the stop intended to rest on the edge (2) of the opening, whereby said bed forms the effective base (3") of the groove and is capable of deflecting resiliently by at least the depth of the other groove (4).

3. A component in accordance with Claim 1 or 2, characterised in that the rear wall (4") of the other groove (4) is raised and forms a stop intended to rest on the inner surface of the end wall (1) of the apparatus.

4. A component in accordance with any of the Claims 1 to 3, characterised in that at least parts of the section of the housing wall (1) located between the other groove (4) and the appertaining front edge of the housing is in the form of external inclined slopes.

5. A component (8) in accordance with any of the Claims 1 to 4 including a protective housing (10) consisting of electrically conductive material which comprises a plurality of contact fingers (11, 12, 13) that extend along at least one base edge thereof and are provided for making contact with an earthing plate (9), characterised in that at least one of the contact fingers (11, 12, 13) comprises an opening (14) through which a mounting screw (15) can be inserted.

## Revendications

1. Composant électrique destiné à être monté par enfichage à partir du côté intérieur d'un appareil dans une ouverture de dimension correspondante d'une paroi avant d'appareil (1),
- ce composant étant en forme de module comportant des connecteurs interrupteurs ou moyens analogues, avec un boîtier de préférence en matière plastique dont l'extrémité avant dans le sens de l'enfichage présente du côté extérieur, un mécanisme d'encliquetage (3, 4), élastique pour le montage par enfichage, ce mécanisme étant réalisé pour venir en appui contre l'arête d'ouverture (2),
- le mécanisme d'encliquetage (3, 4) ayant deux rainures (3, 4) chaque fois parallèles par rapport à l'arête avant du boîtier et qui sont prévues sur les côtés extérieurs sur deux parois de boîtier (3', 4') opposées, rainures dont les fonds (3") destinés à venir en appui contre l'arête de l'ouverture (2) ont une distance correspondant à la largeur de l'ouverture de la paroi frontale (1) de l'appareil et dont l'une est une rainure d'encliquetage (3) avec d'une part une paroi arrière (5) servant de butée, inclinée vers l'arrière et susceptible de se dégager élastiquement et d'autre part, dont au moins le fond (3") est élastique, ce fond pouvant s'enfoncer au moins de la profondeur de l'autre nervure sous l'effet de forces extérieures,
caractérisé en ce que
- le boîtier (20) est en soi rigide et le fond (3') de la rainure (3) forme une partie du boîtier (20) en étant réalisé toutefois de manière élastique par rapport au boîtier (20) et,
- au niveau de la paroi arrière (5), il y a deux languettes (21) élastiques, prévues sur le côté, ces languettes ayant des butées formées sur celles-ci et constituant des cames de verrouillage (22),
- celles-ci, après encliquetage du composant (20) dans l'ouverture de paroi, viennent en appui directement dans l'ouverture de paroi par-dessus l'arête correspondante de l'ouverture (2) et verrouillent le composant (20) mis en place dans sa position de montage.

2. Composant selon la revendication 1,
caractérisé en ce que
le fond (3") de la rainure d'encliquetage (3) est globalement rigide, mais comporte toutefois un appui élastique à ressort formant une butée destinée à venir en appui contre l'arête de l'ouverture (2), par exemple avec un insert ayant l'élasticité du caoutchouc ou un élément de ressort lame formant l'appui du fond de rainure (3") actif, et qui peut s'enfoncer élastiquement au moins de la profondeur de l'autre rainure (4).

3. Composant selon la revendication 1 ou 2,
caractérisé en ce que
la paroi du côté arrière (4") de l'autre rainure (4) est surélevée et forme une certaine butée pour venir en appui contre le côté intérieur de la paroi frontale (1) de l'appareil.

4. Composant selon l'une des revendications 1 à 3,
caractérisé en ce qu'
au moins les parties du segment de paroi de boîtier (1) situées entre l'autre rainure (4) et l'arête avant correspondante du boîtier ont, du côté extérieur, une forme de rampe.

5. Composant (8) selon l'une des revendications 1 à 4, comportant un boîtier protecteur (10) en matière conductrice d'électricité qui comporte plusieurs doigts de contact (11, 12, 13) le long d'au moins une arête de base, ces doigts étant prévus pour venir en contact avec une plaque de mise à la masse (9),
caractérisé en ce qu'
au moins l'un des doigts de contact (11, 12, 13) présente une ouverture (14) pour le passage d'une vis de fixation (15).
